Europäisches Patentamt

European Patent Office

Office européen des brevets

(11) Publication number: **0 177 173**
**B1**

# EUROPEAN PATENT SPECIFICATION

(45) Date of publication of patent specification: **07.11.90**

(51) Int. Cl.⁵: **B 01 D 53/04**

(21) Application number: **85306139.8**

(22) Date of filing: **29.08.85**

(54) Improved apparatus for the separation of a gaseous mixture.

(30) Priority: **30.08.84 GB 8421962**

(43) Date of publication of application:
**09.04.86 Bulletin 86/15**

(45) Publication of the grant of the patent:
**07.11.90 Bulletin 90/45**

(84) Designated Contracting States:
**BE DE FR IT NL**

(56) References cited:
**EP-A-0 046 369**
**GB-A-2 073 043**
**US-A-3 507 097**
**US-A-3 659 399**
**US-A-4 295 863**

(73) Proprietor: **The BOC Group plc**
**Hammersmith House**
**London W6 9DX (GB)**

(72) Inventor: **Sadkowski, Piotr Jan**
**159 Warm Lane**
**London NW2 3AY (GB)**

(74) Representative: **Wickham, Michael et al**
**c/o Patent and Trademark Department The BOC**
**Group plc Chertsey Road**
**Windlesham Surrey GU20 6HJ (GB)**

Courier Press, Leamington Spa, England.

## Description

The present invention relates to apparatus for the separation of a gaseous mixture using pressure swing adsorption techniques (PSA).

It is known from GB—A—2073043 to separate nitrogen from air using an adsorbent which has the ability to effect a separation as between the two major components of air by virtue of its more rapid adsorption of oxygen than of nitrogen. The adsorbent is usually molecular sieve carbon. In operation, a bed of the adsorbent is put through a cycle which includes an adsorption step during which time air is pumped through the bed, most of the oxygen and a proportion of the nitrogen and substantially all of the carbon dioxide and water vapour in the feed are adsorbed and a nitrogen-rich product gas is supplied from the outlet of the bed; and a desorption or regeneration step during which time the outlet of the bed is closed, the bed is vented to atmospheric pressure through its inlet and/or evacuated through its inlet so that the adsorbed gases are substantially removed from the bed thereby preparing it for the next adsorption step.

In practice, two adsorbent beds are employed and operated on similar cycles which are sequenced to be out of phase with one another by 180° so that when one bed is on its adsorption step, the other bed is on its regeneration step and vice-versa. Between the adsorption and the regeneration steps, the pressures in the two beds are equalised by connecting the two bed inlets together and connecting the two bed outlets together. With these connections made, the gas within the void spaces of the bed which has just completed its adsorption step flows into the bed which has just completed its regeneration step by virtue of the pressure difference which exists between the beds at this stage. This equalisation step is found to be beneficial in maximising the product output because the gas in such void spaces will have already become somewhat enriched in nitrogen.

The flow of air into and the flow of product gas leaving each bed during the adsorption step is controlled by conventional individually actuated in-line valves such as ball or butterfly valves. Likewise, the flow of waste gas leaving each bed during a regeneration step and the flow of gas between the beds during a pressure equalization step is controlled by ball or butterfly valves. In a conventional two bed system, there are at least eight ball or butterfly valves and non-return valves controlling the flow of gas into, within and out of the system.

It has been proposed in US—A—4 295 863 to use two spool valves in an apparatus for drying air comprising two parallel vessels, the spool valves controlling the passage of air to be dried to and dry air from the apparatus. The apparatus also includes decompression and repressurisation valves of an unspecified kind. The apparatus does not have valves enabling the pressure to be equalised between the two vessels.

It is an aim of the present invention, in apparatus for the separation of gaseous mixtures, to replace with spool valves the individually actuated in-line valves, including those valves operable to place the vessels in communication with one another, thereby reducing the number of valves required and to eliminate or at least minimise the possibility of valves being operated out of sequence.

According to the present invention there is provided apparatus for the separation of a gas mixture by pressure swing adsorption, comprising first and second adsorption vessels each having a first valve means for selecting whether or not the respective vessel is in communication with an inlet pipeline for a gas mixture to be separated, a second valve means for selecting whether or not the respective vessel is in communication with a product gas delivery pipeline, and a third valve means for selecting whether or not the vessel is in communication with a vent pipeline, fourth and fifth valve means for selecting whether or not there is a path for the flow of gas from one vessel to the other or vice versa, and means for controlling the operation of all the said valve means so as to enable the gas mixture to be separated, characterised in that (i) said valve means are incorporated in three spool valves (104, 104a, 150), comprising (a) a first spool valve (104) incorporating both said first valve means and said fourth valve means (16, 18, 54) and having first inlet ports (110 and 111) communicating respectively with pipes (130 and 132) that terminate in the respective gas inlet ends of the vessels (8 and 10) and a second inlet port (113) communicating with an inlet for gas to be separated, (b) a second spool valve (104a) incorporating both said second valve means and said fifth valve means (22, 24, 56) and having gas inlet ports (110 and 111a) communicating respectively with pipes (136 and 134) that terminate in the product gas ends of the vessels (10 and 8) and (c) a third spool valve (150) incorporating both said third valve means (36, 38) and having an inlet port (153) communicating with a pipe 160 for venting gas, (ii) the first valve means (104) has outlet ports (112 and 114) that communicate respectively with inlet ports (151 and 152) of the third valve means (150) via pipes 142 and 144 respectively, the pipes 142 and 144 communicate with one another via pipe 145 whereby in operation to make possible gas flow between the gas inlet ends of the vessels 8 and 10, and (iii) the second valve means has outlet ports (112a) and (114a) which communicate with opposite ends of a passage 138 whereby to make possible gas flow between the product gas ends of the vessels (8 and 10).

Embodiments of the invention will now be described by way of example, reference being made to the Figures of the accompanying diagrammatic drawings in which:—

Figure 1 is a schematic diagram of a known apparatus using two vessels for the separation of nitrogen from air by pressure swing adsorption techniques;

Figure 2 is a schematic diagram of an apparatus using two vessels for the separation of nitrogen from air by pressure swing adsorption techniques according to the present invention at the pressure equalization step;

Figure 3 is a schematic diagram of the apparatus of Figure 2 with one bed at an adsorption step and the other bed at a regeneration step; and

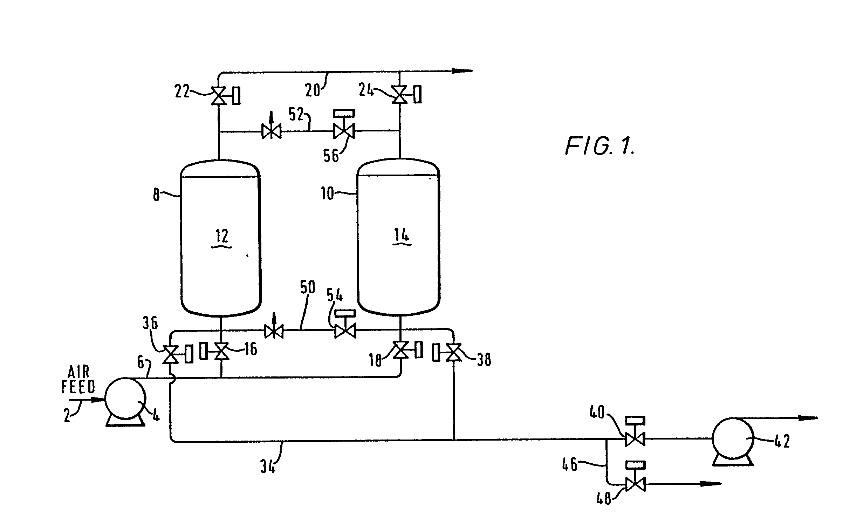

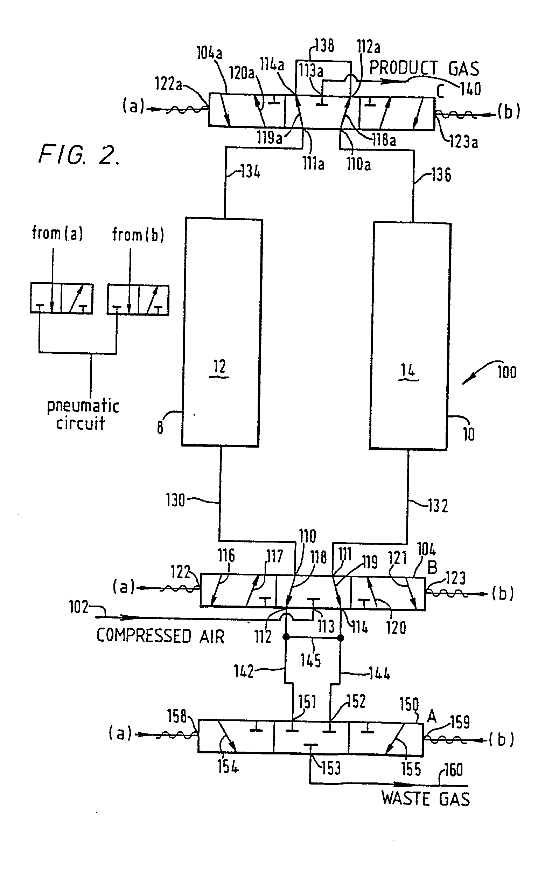

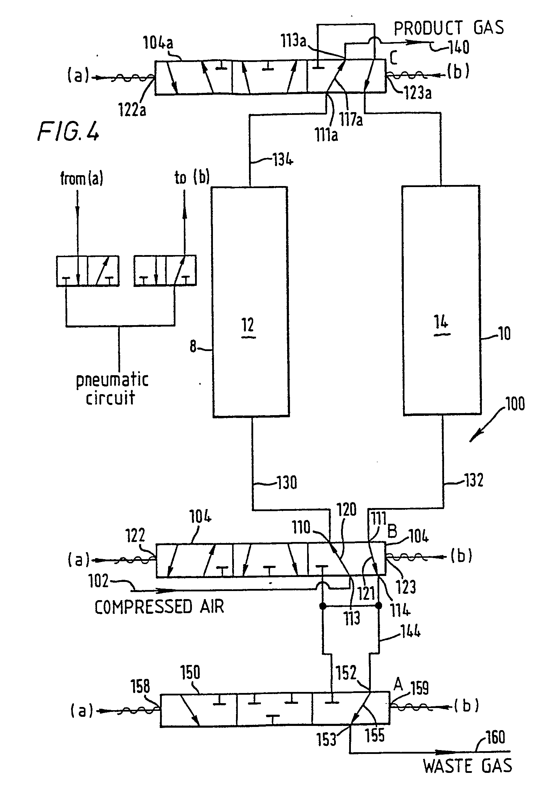

Figure 4 is a schematic diagram of the apparatus of Figure 2 with said one bed at a regeneration step and said other bed at an adsorption step. Referring first to Figure 1, this illustrates the known apparatus as described and shown in GB—A—2073043 for the separation of nitrogen from air. The apparatus includes an air feed line 2 leading to a compressor 4. The outlet from the compressor 4 communicates with an air inlet pipeline 6. The air inlet pipeline 6 is able to be placed in communication with either one of vessels 8 and 10 containing beds 12 and 14 of carbon molecular sieve adsorbent. Ball valve 16 is operable to place the bottom of bed 12 in communication with the inlet pipe 6 or to deny communication between the bed 12 and the inlet pipeline 6. Analogously, ball valve 18 is operable to place the bottom of the bed 14 in communication with the inlet pipeline 6 or to deny such communication.

The apparatus includes an outlet pipeline 20. A ball valve 22 is operable to place the top of the bed 12 in communication with the pipeline 20 or to prevent communication between the bed 12 and the pipeline 20. Analogously, a ball valve 24 is operable to place the top of the bed 14 in communication with the pipeline 20 or to deny such communication.

The apparatus includes an outlet pipeline 34 for waste gas. A ball valve 36 is operable to place the bottom of the bed 12 in communication with the pipeline 34 or may be closed to deny such communication. A ball valve 38 is operable to place the bottom of the bed 14 in communication with the pipeline 34 or, when closed, deny such communication. The pipeline 34 communicates with a vacuum pump 42. The outlet of the vacuum pump 42 communicates with the pipeline 34 for the discharge of waste gas from the apparatus. In communication with the pipeline 34 upstream of a ball valve 40 is a vent pipeline 46 communicating with the atmosphere. In the pipeline 46 is a ball valve 48. If desired, the vent pipeline 46 and the ball valve 48 may be omitted from the apparatus. Alternatively, the vacuum pump 42 and ball valves 40 and 48 may be omitted. If the vacuum pump is omitted, the bed will be subject to atmospheric pressure to effect regeneration of the bed which previously adsorbed oxygen. If the vent pipeline 46 and the ball valve 48 are omitted, the beds 12 and 14 will be subjected to a sub-atmospheric pressure in order to effect regeneration of a bed which previously adsorbed gas.

Pipeline 50 connects together the bottoms of vessels 8, 10. A similar pipeline 52 connects together the tops of vessels 8, 10. In the pipeline 50 is disposed a ball valve 54 and in the pipeline 52 is disposed a ball valve 56. When the ball valves 54 and 56 are open, there is communication between the beds 12 and 14.

Describing very briefly a process using the apparatus in Figure 1 for the separation of nitrogen from air and assuming at the start of a cycle of operations that the bed 12 is at a sub-atmospheric pressure being subjected to vacuum created by the pump 42 and the bed 14 is at its maximum pressure being in communication with the compressor 4. The cycle starts with the beds 12, 14 being placed in communication with one another through the pipelines 50 and 52. In this phase of the cycle ball valves 16, 18, 22, 24, 36 and 38 are all in their closed position and ball valves 54 and 56 are open. Unadsorbed nitrogen-rich gas in the spaces between individual particles of adsorbent in the bed 14 flow through pipelines 50 and 52 into the bed 12. The unadsorbed gas in the bed 14 which passes to the bed 12 is rich in nitrogen. As it passes to the bed 12, so the pressure in the bed 12 increases from below atmospheric pressure and the pressure in the bed 14 undergoes a corresponding reduction.

The cycle will then continue with the bed 12 performing an adsorption step whilst the bed 14 is regenerated in a manner well known in the art.

It will be observed that a minimum of eight ball valves are used in the apparatus illustrated in Figure 1, namely ball valves 16, 18; 22, 24; 36, 38; and 54, 56. A further 2 ball valves 40, 48 can also be incorporated into the apparatus.

Referring now to Figures 2, 3 and 4, an apparatus 100 for the separation of at least one gas, for example, nitrogen from a gaseous mixture such as air by pressure swing adsorption comprises an air feed line 102 extending from a compressor (not shown) and communicating via a port 113 with a first spool valve 104. Valve 104 is a three-position spool valve having a housing with five ports 110, 111, 112, 113, and 114 and a spool with six passageways 116 to 121. The spool is spring loaded within the housing at each end and thus the spool normally assumes a central position as illustrated in Figure 2. At each end of the housing is an inlet 122, 123 for control fluid, for example, air under pressure. Extending from ports 110, 111 in spool valve 104 are two pipelines 130, 132 which communicate respectively with the bottoms (as shown) of vessels 8, 10 containing beds 12, 14 of carbon molecular sieve adsorbent.

Extending from the top (as shown) of each vessel 8, 10 is a pipeline 134, 136 which communicates with ports 111a, 110a of a second spool valve 104a substantially identical to first spool valve 104 and where for convenience like ports, passageways and inlets have been given the same reference numeral with the suffix a. A pipeline 138 extends between ports 112a and 114a and a product gas pipeline 140 extends from port 113a.

Referring again to spool valve 104, extending from ports 112, 114 respectively are pipelines 142, 144 which communicate with ports 151, 152 of a third spool valve 150. The pipelines 142, 144 are interconnected by a pipeline 145. The interconnecting pipes 138 and 145 are not features of commercially available spool valves. We have had specially to provide such pipes (or the like) to enable gas flow between the two vessels to take place. Valve 150 is a three-position spool valve having a housing with three ports 151, 152, 153 and a spool with two passageways 154, 155. As with spool valves 104, 104a, the spool of valve 150 is spring loaded at each end and thus normally assumes a central position (see Figure 2). At each end of the housing of spool valve 150 is an inlet 158, 159 for control fluid. A pipeline 160 extends from port 153 directly to atmosphere or to atmosphere via a vacuum pump (not shown).

Although not shown, the spool valves 104, 104a and 150 are operated from a common servo system, for example, a pneumatic system.

Referring in particular to Figure 2, this illustrates the position of the spool valves 104, 104a and 150 when the apparatus 100 in on its pressure equalisation step. All the inlets 122, 123; 122a, 123a; 158, 159 of the valves 104, 104a and 150 are arranged to communicate with atmosphere so that the springs alone exert pressure on the spools, thus causing the spools to assume their neutral or central position.

Assuming for convenience that bed 14 has just finished its adsorption step and bed 12 its desorption or regeneration step, then gas from the high pressure bed 14 will flow either through pipeline 136, port 110a, passageway 118a, port 112a, pipeline 138, port 114a, passageway 119a, port 111a and pipeline 134 into the top (as shown) of the vessel 8; or pipeline 132, port 111, passageway 119, port 114, pipeline 144, pipeline 145, pipeline 142, port 112, passageway 118, port 110, and pipeline 130 into the bottom (as shown) of vessel 8.

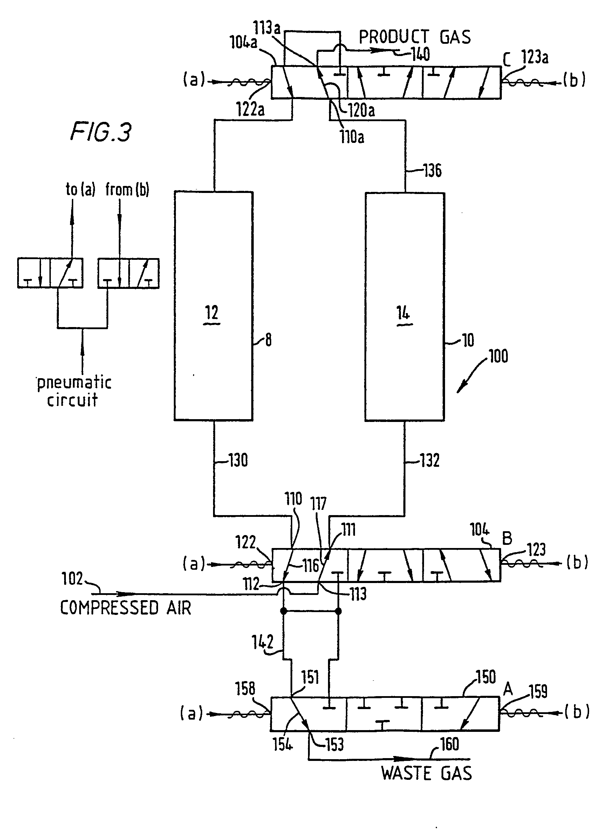

Referring now to Figure 3, this illustrates the position of the spool valves 104, 104a and 150 when bed 12 is being regenerated and bed 14 is on its adsorption step. Pneumatic pressure from the control circuit is applied to inlets 122, 122a and 158 of the spool valves whilst inlets 123, 123a and 159 are connected to atmosphere. This causes the spools to assume their left (as shown) position.

Compressed air/feed gas from the compressor (not shown) flows along pipeline 102, port 113, passageway 117, port 111 and pipeline 132 into the bottom (as shown) of vessel 10. Product gas (nitrogen) will leave vessel 10 and flow through pipeline 136, port 110a, passageway 120a, port 113a and into product gas pipeline 140.

Meanwhile, waste gas in vessel 8 flows through pipeline 130, port 110, passageway 116, port 112, pipeline 142, port 151, passageway 154, port 153 and through waste gas pipeline 160 either directly to atmosphere or via a vacuum pump (not shown) to atmosphere.

Suitable spool valves for use in the invention are avaialble from Cambridge Instruments Ltd.,

London SE20 8EW under the trade name "Baldwin Fluid Power Direction Control Valves".

The term "spool valve" is used herein to describe a valve which has a reciprocable valve member operable to open and close a plurality of gas ports by means other than the gas flowing through said ports. As shown in Figures 2 to 4 of the drawings additional control ports are typically provided to actuate the valve member and may be placed in communication with a pneumatic control circuit.

Referring now to Figure 4, this illustrates the position of the spool valves 104, 104a and 150 when bed 14 is being regenerated and bed 12 is on its adsorption step. Pneumatic pressure in the control circuit is applied to inlet 123, 123a and 159 of the valves whilst inlets 122, 122a and 158 are connected to atmosphere. This causes the spools to assume their right hand (as shown) position.

Compressed air/feed gas from the compressor (not shown) flows along pipeline 102, port 113, passageway 120, port 110 and pipeline 130 into the bottom (as shown) of vessel 8. Product nitrogen gas leaves vessel 8 via pipeline 134, port 111a, passageway 117a, port 113a and into product gas line 140.

Meanwhile, waste gas in vessel 10 flows through pipeline 132, port 111, passageway 121, port 114, pipeline 144, port 152, passageway 155, port 153 and into waste pipeline 160.

It will be apparent that the three spool valves 104, 104a and 150 perform similar functions to the eight ball valves described with reference to Figure 1 and since there are only three spool valves this represents a considerable economy when compared to the known apparatus of Figure 1 using conventional ball valves. Furthermore, the risk of faulty process controllers causing the valves to operate out of sequence can be eliminated. Use of a common pneumatic (or hydraulic) servo controlled system enables the spool valves to be operated simultaneously. Moreover, the various valve functions performed by each individual spool valve are inherently performed simultaneously.

Although reference has been made to a pressure swing adsorption technique for producing nitrogen employing two beds, use of spool valves can clearly be made in pressure swing adsorption processes for producing not only nitrogen, but oxygen or other gases.

**Claims**

1. Apparatus for the separation of a gas mixture by pressure swing adsorption, comprising first and second adsorption vessels each having a first valve means for selecting whether or not the respective vessel is in communication with an inlet pipeline for a feed gas mixture to be separated, a second valve means for selecting whether or not the respective vessel is in communication with a product gas delivery pipeline, and a third valve means for selecting whether or not the vessel is in communication with a vent pipeline, fourth and fifth valve means for selecting whether or not there is a path for the flow of gas from one vessel to the other or vice versa, and means for controlling the operation of all the said valve means so as to enable the gas mixture to be separated, characterised in that (i) said valve means are incorporated in three spool valves (104, 104a, 150), comprising (a) a first spool valve (104) incorporating both said first valve means and said fourth valve means (16, 18, 54) and having first inlet ports (110 and 111) communicating respectively with pipes (130 and 132) that terminate in the respective gas inlet ends of the vessels (8 and 10) and a second inlet port (113) communicating with an inlet for gas to be separated, (b) a second spool valve (104a) incorporating both said second valve means and said fifth valve means (22, 24, 56) and having gas inlet ports (110 and 111a) communicating respectively with pipes (136 and 134) that terminate in the product gas ends of the vessels (10 and 8) and (c) a third spool valve (150) incorporating both said third valve means (36, 38) and having an outlet port (153) communicating with a pipe (160) for venting gas, (ii) the first valve means (104) has outlet ports (112 and 114) that communicate respectively with inlet ports (151 and 152) of the third valve means (150) via pipes (142 and 144), said pipes (142 and 144) communicate with one another via a pipe (145) whereby in operation to make possible gas flow between the gas inlet ends of the vessels (8 and 10), and (iii) the second valve means has outlet ports (112a) and (114a) which communicate with opposite ends of a passage (138) whereby to make possible gas flow between the product gas ends of the vessel (8 and 10).

2. Apparatus according to claim 1, characterised in that each adsorption vessel (8, 10) contains a bed of adsorbent material (12, 14) which adsorbs at least one constituent of the feed gas mixture.

3. An apparatus according to claim 1 or 2, characterised in that the first spool valve (104) is a three position valve which in a first, neutral position (Fig. 2) permits flow of gas between the adsorption vessels (8, 10), in a second position (Fig. 4) permits flow of the feed gas mixture into the first adsorption vessel (8) and concomitantly permits flow of waste gas from the second adsorption vessel (10) towards the third spool valve (150); and in a third position (Fig. 3) permits the flow of feed gas to the second adsorption vessel (10) and concomitantly permits the flow of waste gas from the first adsorption vessel towards the third spool valve (150).

4. Apparatus according to any one of claims 1 to 3, characterised in that the second spool valve (104a) is a three position valve which in a first neutral position (Fig. 2) permits flow of gas between the adsorption vessels (8, 10), in a second position (Fig. 4) permits the flow of product gas from the first adsorption vessel (8), and in a third position (Fig. 3) permits the flow of product gas from the second adsorption vessel (10).

5. Apparatus according to any one of claims 1 to 4, characterised in that the third spool valve (150) is a three position valve which in a first neutral position (Fig. 2) blocks the waste gas outlet pipeline (160) from the first and second adsorption vessels (8, 10), in a second position (Fig. 4) permits the flow of waste gas from the second adsorption vessel (10) through the first spool valve (104) towards the waste gas outlet pipeline (160) and in a third position (Fig. 3) permits the flow of waste gas from the first adsorption vessel (8) through the first spool valve (104) towards the waste gas outlet pipeline (160).

6. Apparatus according to any one of claims 1 to 5, characterised in that the first and second spool valves (104; 104a) have five ports (110, 111, 112, 113, 114; 110a, 111a, 112a, 113a, 114a) and six passageways (116, 117, 118, 119, 120, 121; 116a, 117a, 118a, 119a, 120a, 121a) whilst the third spool valve (150) has three ports (151, 152, 153) and two passageways (154, 155).

7. Apparatus according to any one of claims 1 to 6, characterised in that the first, second and third spool valves (104, 104a, 150) are operable by means of a common fluid servo pipeline system.

8. Apparatus according to any one of claims 1 to 7, characterised in that the first, second and third spool valves (104, 104a, 150) have a reciprocable valve member which assumes a central position in said first neutral position of the spool valves and a position on the one or other side of said central position in said second and third positions of the spool valves, respectively.

9. Apparatus according to any one of claims 1 to 8, characterised in that the valve members of the first, second and third spool valves (104, 104a, 150) are biased in said central position.

**Patentansprüche**

1. Vorrichtung zur Trennung eines Gasgemisches durch Druckwechseladsorption, mit einem ersten Adsorptionsgefäß und einem zweiten Adsorptionsgefäß, die jeweils eine erste, eine zweite und eine dritte Ventileinrichtung aufweisen und jeweils über die erste Ventileinrichtung mit einer Einlaßleitung für ein zu trennendes Speisegasgemisch verbindbar bzw. von dieser trennbar sind, über die zweite Ventilvorrichtung mit einer Produkt-Auslaßleitung verbindbar bzw. von dieser trennbar sind und über die dritte Ventileinrichtung mit einer Entlüftungsleitung verbindbar bzw. von dieser trennbar sind, mit einer vierten und einer fünften Ventileinrichtung, über die wahlweise ein Strömungspfad für eine Gasströmung von einem Gefäß zum anderen oder umgekehrt geschaffen wird, und mit einer Einrichtung für ein solche Steuerung des Betriebs sämtlicher Ventileinrichtungen, daß eine Trennung des Gasgemisches möglich ist, dadurch gekennzeichnet, daß (i) die Ventileinrichtungen in drei Schieberventilen (104, 104a, 150) vereinigt sind, die (a) ein erstes Schieberventil (104) umfassen, das sowohl die ersten Ventileinrichtungen als auch die vierte Ventileinrichtung (16, 18, 54) enthält und erste Einlaßöffnungen (110 und 111) aufweist, die jeweils mit Leitungen (130 und 132) in Verbindung stehen, die an den jeweiligen Gaseinlaßenden der Gefäße (8 und 10) enden, und eine zweite Einlaßöffnung (113) besitzt, die mit einem Einlaß für das zu trennende Gas in Verbindung steht, (b) ein zweites Schieberventil (104a) umfassen, das sowohl die zweiten Ventileinrichtungen als auch die fünfte Ventileinrichtung (22, 24, 56) enthält und Gaseinlaßöffnungen (110 und 111a) aufweist, die jeweils mit Leitungen (136 und 134) in Verbindung stehen, die an den Produktgasenden der Gefäße (10 und 8) enden, und (c) ein drittes Schieberventil (150) umfassen, das die beiden dritten Ventileinrichtungen (36, 38) enthält und eine Auslaßöffnung (153) besitzt, die mit einer Leitung (160) für Entlüftungsgas in Verbindung steht, (ii) die erste Ventileinrichtung (104) Auslaßöffnungen (112 und 114) besitzt, die jeweils mit Einlaßöffnungen (151 und 152) der dritten Ventileinrichtung (150) über Leitungen (142 und 144) in Verbindung stehen, die über eine Leitung (145) miteinander verbunden sind, um im Betrieb einen Gasfluß zwischen den Gaseinlaßenden der Gefäße (8 und 10) zu ermöglichen, und (iii) die zweite Ventileinrichtung Auslaßöffnungen (112a und 114a) besitzt, die mit entgegengesetzten Enden eines Durchgangs (138) in Verbindung stehen, um einen Gasfluß zwischen den Produktgasenden der Gefäße (8 und 10) zu ermöglichen.

2. Vorrichtung nach Anspruch 1, dadurch gekennzeichnet, daß jedes Adsorptionsgefäß (8, 10) eine Schicht aus Adsorbens-Material (12, 14) enthält, das zumindest einen Bestandteil des Speisegasgemisches adsorbiert.

3. Vorrichtung nach Anspruch 1 oder 2, dadurch gekennzeichnet, daß das erste Schieberventil (104) ein Dreistellungsventil ist, das in einer ersten, neutralen Stellung (Fig. 2) eine Gasströmung zwischen den Adsorptionsgefäßen (8, 10) ermöglicht, in einer zweiten Stellung (Fig. 4) das Einströmen des Speisegasgemisches in das erste Adsorptionsgefäß (8) und gleichzeitig das Abströmen von Abgas vom zweiten Adsorptionsgefäß (10) zum dritten Schieberventil (150) ermöglicht, und in einer dritten Stellung (Fig. 3) eine Speisegasströmung zum zweiten Adsorptionsgefäß (10) und gleichzeitig das Abströmen von Abgas vom ersten Adsorptionsgefäß zum dritten Schieberventil (150) ermöglicht.

4. Vorrichtung nach einem der Ansprüche 1 bis 3, dadurch gekennzeichnet, daß das zweite Schieberventil (104a) ein Dreistellungsventil ist, das in einer ersten, neutralen Stellung (Fig. 2) eine Gasströmung zwischen den Adsorptionsgefäßen (8, 10) ermöglicht, in einer zweiten Stellung (Fig. 4) das Abströmen von Produktgas von dem ersten Adsorptionsgefäß (8) und in einer dritten Stellung (Fig. 3) das Abströmen von Produktgas von dem zweiten Adsorptionsgefäß (10) ermöglicht.

5. Vorrichtung nach einem der Ansprüche 1 bis 4, dadurch gekennzeichnet, daß das dritte Schieberventil (150) ein Dreistellungsventil ist, das in einer ersten, neutralen Stellung (Fig. 2) die Abgas-Auslaßleitung (160) von dem ersten und dem zweiten Adsorptionsgefäß (8, 10) trennt, in einer zweiten Stellung (Fig. 4) ein Abströmen von Abgas von dem zweiten Adsorptionsgefäß (10) durch das erste Schieberventil (104) zu der Abgas-Auslaßleitung (160) zuläßt und in einer dritten Stellung (Fig. 3) das Abströmen von Abgas von dem ersten Adsorptionsgefäß (8) durch das erste Schieberventil (104) zu der Abgas-Auslaßleitung (160) zuläßt.

6. Vorrichtung nach einem der Ansprüche 1 bis 5, dadurch gekennzeichnet, daß das erste sowie das zweite Schieberventil (104; 104a) jeweils fünf Anschlüsse (110, 111, 112, 113, 114; 110a, 111a, 112a, 113a, 114a) und sechs Durchgänge (116, 117, 118, 119, 120, 121; 116a, 117a, 118a, 119a, 120a, 121a) umfassen, während das dritte Schieberventil (150) drei Anschlüsse (151, 152, 153) und zwei Durchgänge (154, 155) aufweist.

7. Vorrichtung nach einem der Ansprüche 1 bis 6, dadurch gekennzeichnet, daß das erste, zweite und dritte Schieberventil (104, 104a, 150) mittels eines gemeinsamen Fluid-Servoleitungssystems betätigbar sind.

8. Vorrichtung nach einem der Ansprüche 1 bis 7, dadurch gekennzeichnet, daß das erste, zweite und dritte Schieberventil (104, 104a, 150) jeweils ein hin- und herbewegbares Ventilglied umfassen, das in der ersten, neutralen Stellung der Schieberventile eine mittlere Stellung einnimmt und eine Stellung auf der einen oder anderen Seite der mittleren Stellung in der zweiten bzw. dritten Stellung der Schieberventile.

9. Vorrichtung nach einem der Ansprüche 1 bis 8, dadurch gekennzeichnet, daß die Ventilglieder der ersten, zweiten und dritten Schieberventile (104, 104a, 150) indie Mittelposition vorbelastet sind.

**Revendications**

1. Appareil pour la séparation d'un mélange de gaz par adsorption sous l'effet de variations de la pression, cet appareil comprenant un premier et un second récipients d'adsorption ayant chacun un premier dispositif de valves pour choisir si le récipient respectif est ou non en communication avec un conduit d'admission pour l'introduction d'un mélange de gaz à séparer, un second dispositif de valves pour choisir se le récipient respectif est ou non en communication avec un conduit de délivrance de gaz produit, et un troisième dispositif de valves pour choisir si le récipient est ou non en communication avec un conduit d'évent, un quatrième et un cinquième dispositifs de valves pour choisir s'il existe ou non un trajet d'écoulement de gaz d'un récipient vers l'autre ou inversement, et un moyen pour commander le fonctionnement de l'ensemble desdits dispositis de valves de façon à permettre la séparation du mélange de gaz, appareil caractérisé en ce que (i) lesdits dispositifs de valves sont incorporés à trois distributeurs (104, 104a, 150) comprenant (a) un premier distributeur (104) incorporant à la fois lesdits premier dispositif de valves et quatrième dispositif de valves (16, 18, 54) et comportant des premiers orifices (110 et 111) d'entrée communiquant respectivement avec des tubes (130 et 132) qui débouchent dans les extrémités respectives d'entrée de gaz des récipients (8 et 10) et un second orifice (113) d'entrée communiquant avec une admission de gaz à séparer, (b) un second distributeur (104a) incorporant à la fois lesdits second dispositif de valves et cinquième dispositif de valves (22, 24, 26) et comportant des orifices (110 et 111a) d'entrée de gaz communiquant respectivement avec des tubes (136 et 134) qui débouchent dans les extrémités des récipients (10 et 8) correspondant au gaz produit, et (c) un troisième distributeur (150) incorporant à la fois lesdits troisième dispositif de valves (36, 38) et ayant un orifice (153) de sortie communiquant avec un tube (160) pour le gaz d'évent; (ii) le premier dispositif de valves (104) comporte des orifices (112 et 114) de sortie que communiquant respectivement avec des orifices (151 et 152) d'entrée du troisième dispositif de valves (150) par l'intermédiaire de tubes (142 et 144), lesdits tubes (142 et 144) communiquant l'un avec l'autre par l'intermédiaire d'un tube (145) de manière à rendre possible en service un écoulement de gaz entre les extrémités d'entrée de gaz des récipients (8 et 10), et (iii) le second dispositif de valves comporte des orifices (112a) et (114a) de sortie qui communiquent avec des extrémités opposées d'un passage (138), de façon à permettre un écoulement de gaz entre les extrémités des récipients (8 et 10) correspondant au gaz produit.

2. Appareil selon la revendication 1, caractérisé en ce que chaque récipient (8, 10) d'adsorption contient un lit de matières adsorbantes (12, 14) qui adsorbe au moins un constituant dudit mélange de gaz d'alimentation.

3. Appareil selon la revendication 1 ou 2, caractérisé en ce que le premier distributeur (104) est un distributeur à trois positions qui, dans une première position neutre (figure 2), permet un écoulement de gaz entre les récipients (8, 10) d'adsorption; qui, dans une second position (figure 4), permet l'écoulement du mélange gazeux d'alimentation et sa pénétration dans le premier récipient (8) d'adsorption et, en même temps, permet l'écoulement de gaz résiduaire du second récipient (10) d'adsorption vers le troisième distributeur (150); et qui, dans une troisième position (figure 3) permet l'écoulement de gaz d'alimentation vers le second récipient (10) d'adsorption et permet en même temps l'écoulement de gaz résiduaire du premier récipient d'adsorption vers le troisième distributeur (150).

4. Appareil selon l'une quelconque des revendications 1 à 3, caractérisé en ce que le second distributeur (104a) est un distributeur à trois positions qui, dans une première position neutre (figure 2), permet un écoulemente de gaz entre les récipients (8, 10) d'adsorption; qui, dans une seconde position (figure 4), permet l'écoulement du gaz produit à partir du premier récipient (8) d'adsorption et qui, dans une troisième position (figure 3), permet l'écoulement de gas produit à partir du second récipient (10) d'adsorption.

5. Appareil selon l'une quelconque des revendications 1 à 4, caractérisé en ce que le troisième distributeur (150) est un distributeur à trois positions qui, dans une première position neutre (figure 2), bloque le conduit (160) de sortie de gaz résiduaire provenant des premier et second récipients (8, 10) d'adsorption; qui, dans une seconde position (figure 4), permet l'écoulement de gaz résiduaire du second récipient (10) d'adsorption, en passant par le premier distributeur (104) vers le conduit (160) de sortie de gaz résiduaire et qui, dans une troisième position (figure 3) permet l'écoulement de gaz résiduaire à partir du premier récipient (8) d'adsorption, en passant par le premier distributeur (104) vers le conduit (160) de sortie de gaz résiduaire.

6. Appareil selon l'une quelconque des revendications 1 à 5, caractérisé en ce que les premier et second distributeurs (104; 104a) comportent cinq orifices (110, 111, 112, 113, 114; 110a, 111a, 112a, 113a, 114a) et six passages (116, 117, 118, 119, 120, 121; 116a, 117a, 118a, 119a, 120a, 121a) cependant que le troisième distributeur (150) comporte trois orifices (151, 152, 153) et deux passages (154, 155).

7. Appareil selon l'une quelconque des revendications 1 à 6, caractérisé en ce que les premier, second et troisième distributeurs (104, 104a, 150) peuvent être manoeuvrés à l'aide d'un système commun de conduits de servo-commande par fluide.

8. Appareil selon l'une quelconque des revendications 1 à 7, caractérisé en ce que les premier, second et troisième distributeurs (104, 104a, 150) ont un obturateur pouvant être animé d'un mouvement alternatif et qui prend une position centrale dans ladite première position neutre des distributeurs et prend une position, de l'un ou l'autre côté de ladite position centrale, dans lesdites seconde et troisième positions des distributeurs, respectivement.

9. Appareil selon l'une quelconque des revendications 1 à 8, caractérisé en ce que les obturateurs des premier, second et troisième distributeurs (104, 104a, 150) sont sollicités de façon à se maintenir dans ladite position centrale.

FIG.1.

FIG. 2.

PRODUCT GAS

pneumatic circuit

COMPRESSED AIR

WASTE GAS

FIG.3

FIG. 4

PRODUCT GAS

COMPRESSED AIR

WASTE GAS

pneumatic circuit

from (a)  to (b)

4